# EUROPÄISCHE PATENTANMELDUNG

(11) **EP 0 531 956 A1**
(43) Veröffentlichungstag der Anmeldung: **17.03.1993**
(21) Anmeldenummer: 92115381.3
(22) Anmeldetag: 09.09.1992
(51) Int. Cl.: G01B 5/14, G01B 7/14, B07C 5/06

(54) **Verfahren und Vorrichtung zum Messen der Flügeligkeit von Falz-Dachziegeln**

(30) Priorität: 11.09.1991 DE 4130163
(71) Anmelder: Erlus Baustoffwerke AG, D-84086 Neufahrn (DE)
(72) Erfinder: Ingenpass, Heinz, Dipl.-Ing., W-8305 Ergoldsbach (DE)
(74) Vertreter: Lohrentz, Franz, Dipl.-Ing.

(57) **Zusammenfassung**

Ein Meßverfahren und eine Vorrichtung zur Messung der Flügeligkeit von Falz-Dachziegeln. Die Unterkante des Wulstes des Falz-Dachziegels wird in einer geraden Linie festgelegt und der Abstand des Rillengrundes einer Wasserfalzrille (6) von einer durch Meßtaster (22) festgelegten Bezugsgeraden gemessen. Die Differenz der Abstände ergibt die Flügeligkeit.

## Beschreibung

Die Erfindung betrifft ein verfahren zum Messen der Flügeligkeit von Falz-Dachziegeln sowie eine Vorrichtung zur Durchführung des Verfahrens.

Falz-Dachziegel weisen in der Regel an einer Längsseite des Mittelfeldes einen Wulst und an der anderen Längsseite davon einen Wasserfalz auf. Im Idealfall eines Falz-Dachziegels dieser Art liegt im eingedeckten Zustand die Unterkante des Wulstes satt und auf ihrer ganzen Länge auf der Oberseite des Wasserfalzes, z.B. im Grund einer Wasserfalzrille oder auf einer Rippe davon, des benachbarten Dachziegels auf. In der Praxis stellt sich dieser Idealfall jedoch nicht ohne weiteres ein, weil infolge des Herstellungsprozesses und von Schwindvorgängen beim Brennen im Fall von Ton-Dachziegeln die Oberseite des Wasserfalzes nicht exakt parallel zu der Unterkante des Wulstes verläuft, d.h. der Dachziegel ist flügelig. Das Ausmaß der Flügeligkeit eines Falz-Dachziegels muß innerhalb relativ enger Grenzen gehalten werden, weil hierdurch die Lagesicherheit der Dachziegel im eingedeckten Zustand bestimmt wird. Hierzu ist es notwendig, die Flügeligkeit der Dachziegel zu messen.

Die Flügeligkeit von Dachziegeln wurde bisher in der Weise bestimmt, daß der Dachziegel auf eine ebene Platte mit seiner Unterseite gedrückt und darauf festgehalten wurde, wobei durch Unterschieben eines Keils an einer Ecke die Abweichung dieser Ecke von der durch die Platte bestimmten Ebene ermittelt wurde. Es ist auch eine Meßmethode bekannt, bei der mittels eines Dreipunkt-Tasters die Unterseite des Falz-Dachziegels abgegriffen und Abweichungen von einer Ebene ermittelt wurden. Schließlich ist auch schon ein Verfahren und eine Vorrichtung zur Überprüfung der Flügeligkeit bekannt, bei denen im Bereich der Förderbahn die Dachziegel angehalten und justiert werden, daraufhin durch eine Hubplatte der Dachziegel um einen genau bestimmten Hubweg von der Förderbahn abgehoben wird und in den Bereich von vier oberhalb der Hubplatte angeordneten, auf die Eckbereiche des Dachziegels ausgerichteten Meßstiften gebracht wird. Die Meßstifte sind mit Schaltelementen verbunden, die bei Betätigung geschaltet werden und die Flügeligkeit anzeigen (DE-PS 32 47 974). Es hat sich jedoch gezeigt, daß mittels dieser bekannten Meßmethoden die Flügeligkeit nicht so exakt bestimmt werden kann, daß damit auch eine eindeutige Aussage über die Lagesicherheit des Dachziegels im eingedeckten Zustand gemacht werden könnte. Insbesondere lässt sich immer wieder feststellen, daß Dachziegel als die Flügeligkeits-Toleranz überschreitend und damit als Ausschluß gemessen werden, die bei der Eindeckung im Dachverband eine einwandfreie Lage einnehmen würden und daher brauchbar wären.

Aufgabe der Erfindung ist es, ein Verfahren und eine Vorrichtung zum Messen der Flügeligkeit von Falz-Dachziegeln vorzuschlagen, die eine genaue Messung der Flügeligkeit in dem Sinne gestatten, daß dadurch ein eindeutiger Rückschluß auf die Lagesicherheit der Dachziegel im eingedeckten Zustand möglich ist.

Erfindungsgemäß ist diese Aufgabe gelöst durch das Verfahren gemäß den Patentansprüchen 1 und 2 sowie durch die Meßvorrichtung gemäß dem Patentanspruch 5.

Die Erfindung beruht auf der Erkenntnis, daß für die Lagesicherheit auf dem Dach nicht generell die Unterseite eines Falz-Dachziegels, sondern nur die Unterkante des Wulstes sowie die Oberseite des Wasserfalzes (Rillengrund oder Rillenoberkante je nach Art der Verfalzung) im eingedeckten Zustand relevant sind. Nur diese ineinander zu fügenden Ränder bzw. Randbereiche des Falz-Dachziegels bestimmen bei der Eindeckung auf dem Dach die Lage des Dachziegels. Folglich kann ein exaktes Bild über die im eingedeckten Zustand auftretende Flügeligkeit nur erhalten werden, wenn an diesen Stellen des Falz-Dachziegels gemessen wird.

Bei dem erfindungsgemässen Verfahren wird zunächst entweder die Wulstunterkante oder die Wasserfalz-Oberseite ausgerichtet, so daß eine gerade Linie erhalten wird, zu der dann eine parallele Bezugsgerade festgelegt wird. Diese Bezugsgerade befindet sich zweckmässigerweise auf der der geraden Linie gegenüberliegenden Seite des Dachziegels, d.h. im Bereich des Wasserfalzes bzw. der Wulstunterkante. Von dieser Bezugsgerade aus wird zweckmässigerweise senkrecht auf die Oberseite des Wasserfalzes bzw. auf die Unterkante des Wulstes gemessen. Zur Messung werden mindestens zwei Meßpunkte benötigt, von denen einer zweckmässigerweise in der Nähe des Kopffalzes und der andere zweckmässigerweise in der Nähe des Fußfalzes liegt. Beide Meßpunkte liegen auf einer Meßgeraden, die ebenfalls wenigstens annähernd parallel zu der Bezugsgeraden bzw. zu der erstgenannten geraden Linie verläuft. Jedoch sind Abweichungen dieser Meßgeraden von der genau parallelen Lage in der Fläche der Wasserfalzoberseite bzw. der Wulstunterkante nicht besonders kritisch. Durch Bestimmung des jeweiligen Abstandes der beiden Meßpunkte von der Bezugsgeraden und durch Differenzbildung lässt sich feststellen, wie sehr die beiden Meßpunkte von der parallelen Lage bezüglich der Wulstunterkante bzw. der Wasserfalzoberseite abweichen. Die Flügeligkeit wird entweder unmittelbar durch diese Abstandsdifferenz oder prozentual durch Bezug der Abstandsdifferenz zu dem Längsabstand der Meßpunkte ausgedrückt.

Zur Durchführung des geschilderten Meßverfahrens sind mannigfaltige Gestaltungen einer entsprechenden Meßvorrichtung denkbar. Wesentlich ist jedoch eine Auflage, auf der die Wulstunterkante bzw. die Oberseite des Wasserfalzes aufgelegt und fixiert werden kann. Hierzu dient eine Zweipunkt-Auflage, d.h. z.B. auf zwei Meßschneiden, um geringfügige Abweichungen der Wulstunterkante bzw. der Wasserfalzoberseite von einem exakt geraden Verlauf auszuschalten. Für die geschilderte Abstandsmessung werden mindestens zwei Meßtaster vorgesehen, welche in ihrer Ausgangslage die Bezugsgerade definieren. Zweckmässigerweise sind beide Meßtaster in ihrer Ausgangslage von vornherein in gleicher Höhenlage über dem Meßrahmen bzw. der Zweipunkt-Auflage angeordnet, so daß die Bezugsgerade unmittelbar durch die Fixierung der beiden Meßtaster an der Halterung bestimmt ist. Sind die beiden Meßtaster jedoch bezüglich des Meßrahmens bzw. der Zweipunkt-Auflage in unterschiedlichen Höhen befestigt, so muß bei der Definition der Bezugsgeraden der Höhenunterschied der beiden Meßtaster einkalkuliert werden.

Aufgrund der sehr einfachen Ausgestaltung der Meßvorrichtung nach der Erfindung ist es denkbar und möglich, die Flügeligkeitsmessung im Rahmen des Produktionsprozesses, d.h. nach dem Brennen und vor dem Palettieren der Dachziegel, durchzuführen, ohne zusätzlichen Zeitaufwand zu verursachen. Hierzu kann in einer Produktionsanlage, in der die Dachziegel aus dem Brennofen taktweise einer Palettierungsstation zugeführt werden, eine bestimmte Anzahl von Dachziegeln gleichzeitig entnommen, auf eine entsprechende Anzahl von Meßvorrichtungen in einer Meß- oder Pufferstation verbracht und dort die Flügeligkeitsmessung ausgeführt werden. Somit steht für den Meßvorgang, der an den in die Meßstation verbrachten Dachziegeln gleichzeitig durchgeführt wird, eine Zeitdauer zur Verfügung, die derjenigen Zeitdauer entspricht, welche bis zum erneuten Auffüllen der durch die vorherige Entnahme geleerten Förderband-Plätze benötigt wird. Die bereits vermessenen Dachziegel können unmittelbar nach dem fertigen Meßvorgang aus der Meß- und Pufferstation wieder dem Förderweg eingegliedert werden, der zu der Palettierungsstation führt; mit dem Freiwerden der entsprechenden Meßplätze in der Meß- und Pufferstation kann daraufhin die nächste Anzahl von Dachziegeln dorthin verbracht werden. Nimmt man beispielsweise an, daß der Fördertakt der Dachziegel 2,2 Sekunden beträgt und werden zehn Dachziegel in der Meß- und Pufferstation auf die entsprechende Anzahl von Meßvorrichtungen verbracht, so stehen für den Transport- und Meßvorgang insgesamt 22 Sekunden zur Verfügung.

Weitere Ausgestaltungen der Erfindung ergeben sich aus der nachfolgenden Beschreibung anhand eines Ausführungsbeispiels sowie aus weiteren Unteransprüchen. In den Zeichnungen zeigen:
Fig. 1 Draufsicht, Querschnitt und Längsschnitt eines Falz-Dachziegels;
Fig. 2 eine Draufsicht auf eine erfindungsgemässe Meßvorrichtung, in welcher strichpunktiert ein zu vermessender Falz-Dachziegel eingezeichnet ist;
Fig. 3 eine Seitenansicht der Meßvorrichtung mit einem darin angeordneten Falz-Dachziegel, und
Fig. 4 eine schematische Darstellung des Ausschnitts aus einer Produktionsanlage, in welche eine mit erfindungsgemässen Meßvorrichtungen ausgestattete Meß- und Pufferstation eingegliedert ist.

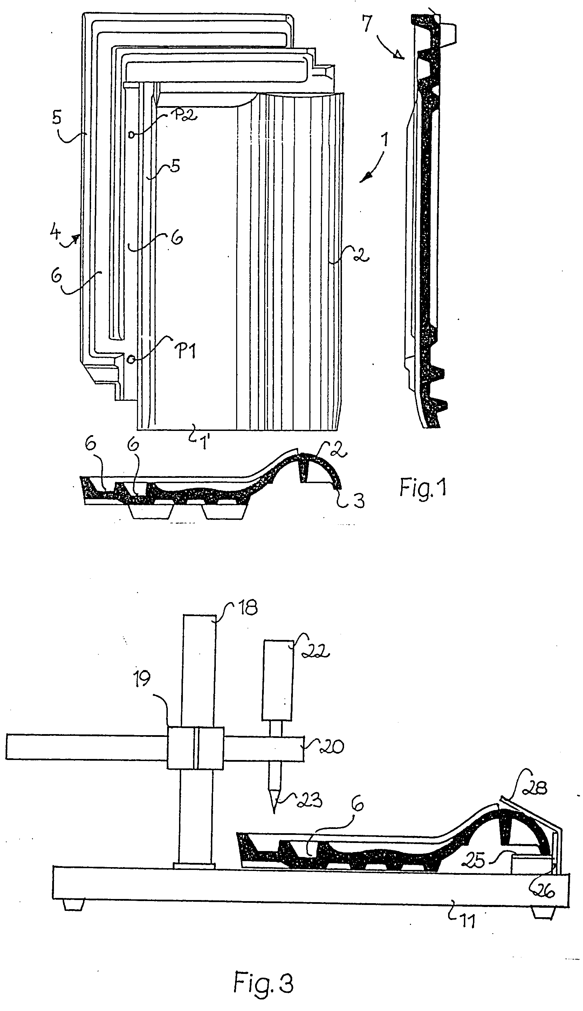

In Fig. 1 ist ein Falz-Dachziegel 1, nämlich eine Flachdachpfanne, dargestellt. Dieser weist neben seinem Mittelfeld 1' einen Wulst 2 mit einer Wulstunterkante 3 sowie einen Wasserfalz 4 mit mehreren Wasserfalzrippen 5 und dazwischen liegenden Wasserfalzrillen 6 auf. Am oberen Ende befindet sich ein Kopffalz 7 mit mehreren Rippen bzw. Rillen.

Im eingedeckten Zustand kommt die Unterkante 3 des Wulstes 2 in der dem Mittelfeld 1 am nächsten liegenden Wasserfalzrille 6 zu liegen. Somit bestimmt die Ausrichtung der Unterkante 3 und dieser Rille die Flügeligkeit des Dachziegels.

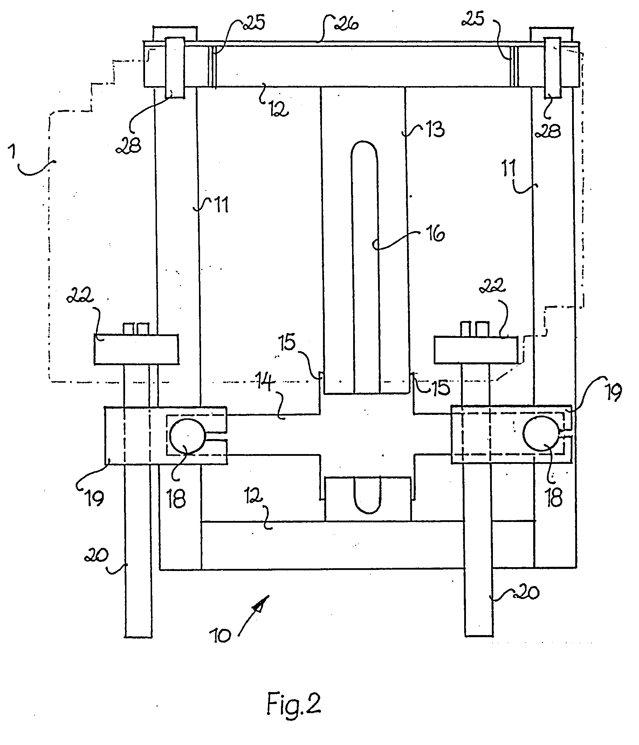

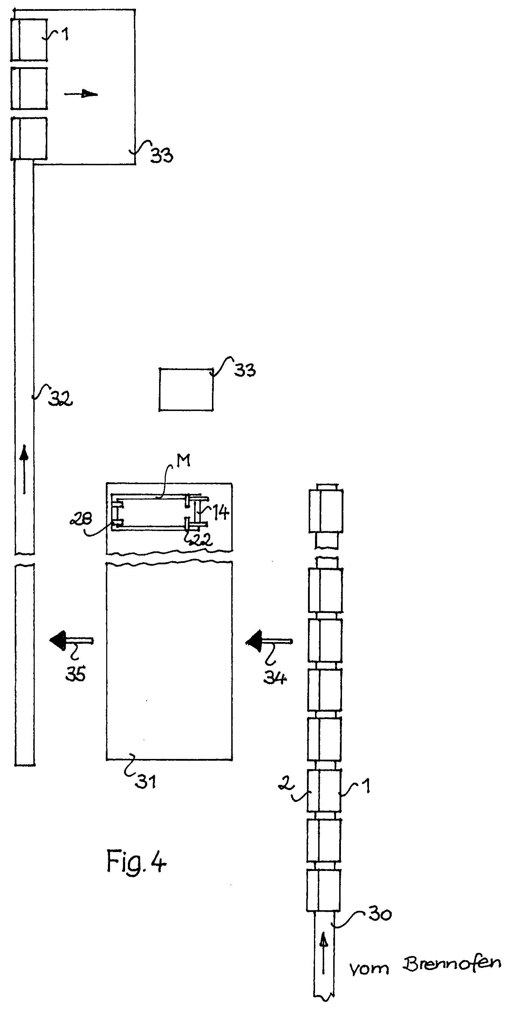

Die Meßvorrichtung gemäß den Fig. 2 und 3 weist einen im Ganzen mit 10 bezeichneten Meßrahmen auf, der im wesentlichen ein Rechteck bildet und sich aus zwei Längsstreben 11, zwei Querstreben 12 und einer etwas breiteren Längsmittelstrebe 13 zusammensetzt. Die genannten Streben sind fest miteinander verbunden. Auf der Längsmittelstrebe 13 ist ein Meßschlitten 14 verschiebbar angeordnet, der mittels seitlichen Führungsplatten 15 an den Seitenflächen der im Querschnitt rechteckigen Längsmittelstrebe 13 geführt ist. Die Längsmittelstrebe 13 weist ein Langloch 16 auf, in welches eine den Meßschlitten 14 durchsetzende, nicht gezeigte Klemmschraube mit Klemmblock hineinragt, so daß der Meßschlitten 14 an der Längsmittelstrebe 13 festlegbar ist.

An den beiden einander gegenüberliegenden Enden des Meßschlittens 14 sind zwei zylindrische Säulen 18 befestigt, an denen mittels Klemmblöcken 19 sich in Längsrichtung des Meßrahmens 10 erstreckende Träger 20 gehalten sind. Die Träger 20 durchsetzen die Klemmblöcke 19 und sind daran auf nicht näher gezeigte Weise festklemmbar.

Sie können eine Meßskala tragen, um ihre Lage gegenüber den Klemmblöcken 10 reproduzierbar einstellbar zu machen. Am vorderen (oberen) Ende haltern die Träger 20 je einen Meßtaster 22 in Form einer Hundertstel-Meßuhr. Diese sind in dem zu diesem Zweck geschlitzten vorderen Ende der Träger 20 festgeklemmt. (Sämtliche Schrauben, die der Klemmfixierung der Klemmblöcke 19 auf den Säulen 18, der Träger 20 an den Klemmblöcken 19 und der Meßtaster 22 an den Trägern 20 dienen, sind aus Gründen der besseren Übersichtlichkeit nicht dargestellt). Die Tastspitzen 23 ragen von den Trägern 20 aus nach unten (Fig. 3).

Die - in Fig. 2 - obere Querstrebe 12 trägt nahe den beiden Längsstreben 11 je eine Schneide 25, die zusammen eine Zweipunkt-Auflage für den darauf zu Meßzwecken aufzulegenden Falz-Dachziegel 1 bilden. An ihrer Außenseite trägt die Querstrebe 12 außerdem eine Anschlagleiste 26, die über die Oberseite der Querstrebe 12 hinausragt (Fig. 3). An dem Kopfende jeder der beiden Längsstreben 11 ist außerdem eine durch eine Blattfeder 28 gebildete Klemmvorrichtung für den Falz-Dachziegel 1 vorgesehen.

Das erfindungsgemässe Meßverfahren läuft unter Anwendung der vorstehend geschilderten Meßvorrichtung folgendermassen ab:
Zunächst wird der Falz-Dachziegel 1 auf die obere Querstrebe 12 mit der Wulstunterkante 3 aufgelegt und gegen die Anschlagleiste 26 geschoben. Die Schneiden 25 definieren dabei eine gerade Auflagelinie für die Unterkante 3; die Anschlagleiste 26 richtet den Falz-Dachziegel 1 einigermassen bezüglich des Meßschlittens 14 aus. Der Falz-Dachziegel ist strichpunktiert in Fig. 2 angedeutet. Durch die Klemmvorrichtung 28 wird der Falz-Dachziegel 1 auf die Schneiden 25 gedrückt, so daß die Unterkante 3 ihre durch diese Schneiden bestimmten Lage beibehält, auch wenn die restliche Unterseite des Falz-Dachziegels 1 nur teilweise und/oder einseitig auf den Längsstreben 11 aufliegen sollte. Die Oberseiten der Längsstreben 11 liegen in einer Ebene.

Nunmehr werden in der dem Mittelfeld 1' des Falz-Dachziegels 1 nächstgelegenen Wasserfalzrille 6 zwei Meßpunkte P1 und P2 festgelegt, von denen der Meßpunkt P1 nahe dem unteren Ende und der Meßpunkt P2 nahe an dem Kopffalz 7 des Falz-Dachziegels 1 liegen. Die Meßtaster 22 werden durch entsprechende Einstellung der Träger 20 in den Klemmblöcken 19 sowie durch die Einstellung der Klemmblöcke 19 an den Säulen 18 so ausgerichtet, daß sie dem Abstand der Meßpunkte P1, P2 entsprechen und außerdem in einer geraden Linie liegen, welche zu der durch die Schneiden 25 und die Anschlagleiste 26 gebildeten Auflagelinie der Unterkante 3 einigermassen parallel verläuft. Durch Längsverschiebung des Meßschlittens 14 auf der Längsmittelstrebe 13 können die Meßspitzen 23 dann über die Meßpunkte P1, P2 verbracht werden. Hierdurch definieren sie eine Bezugsgerade, die parallel zur Auflagelinie der Unterkante 3 verläuft. Nunmehr werden die Klemmblöcke 19 an den Säulen 18 gemeinsam auf die gleiche Höhe herabgefahren, bis die Meßspitzen 23 auf den Meßpunkten P1, P2 in der Wasserfalzrille 6 auftreffen. Um die gemeinsame Höhenlage der Klemmblöcke 19 zu gewährleisten, können die Säulen 18 eine entsprechende Skaleneinteilung aufweisen. Es ist aber auch möglich, durch eine entsprechende Verstellvorrichtung die Klemmblöcke 19 nur gemeinsam verstellbar zu machen, so daß sie in gleichbleibender Parallelage zu der Auflagelinie der Unterkante 3 verstellbar sind.

Verläuft der Rillengrund der Wasserfalzrille 6 genau parallel zu der Unterkante 3 des Wulstes 2, d.h. befinden sich die Meßpunkte P1, P2 auf einer zu der Auflagelinie der Unterkante 3 parallelen Linie, so werden durch die Meßtaster 22 gleiche Abstände von der durch die eingestellte Lage der Klemmblöcke 19 bestimmten Bezugsgeraden gemessen. In der Regel wird dies jedoch nicht zutreffen, d.h. der Falz-Dachziegel 1 wird flügelig sein und die von den beiden Meßtastern 22 gemessenen Abstände von der Bezugsgeraden werden differieren. Die Differenz der Abstände gibt die Flügeligkeit an und gestattet es, festzustellen, ob die Flügeligkeit noch in der Toleranz liegt.

Das erfindungsgemässe Meßverfahren ist nicht auf die Anwendung der vorstehend beschriebenen Meßvorrichtung beschränkt, sondern kann auch mittels anders gestalteter Meßvorrichtungen ausgeführt werden. So ist es auch möglich, die Meßvorrichtung so zu gestalten, daß nicht die Unterkante 3 des Falz-Dachziegels 1 in ihrer Lage genau ausgerichtet wird, sondern der Rillengrund der Wasserfalzrille 6. Dementsprechend sind dann Meßpunkte an der Unterkante 3 festzulegen und deren Abstände von einer einzurichtenden Bezugsgeraden zu ermitteln. Es versteht sich, daß in diesem Fall die Vorrichtung an die insoweit umgedrehte Lage des Falz-Dachziegels 1 angepasst werden muß in dem Sinn, daß dieser wackelfrei festgehalten werden kann.

Soweit in der vorstehenden Beschreibung auch davon gesprochen ist, daß die Meßspitzen 23 der Meßtaster 22 von oben her auf die Meßpunkte P1, P2 herabgefahren werden, ist dies nicht als beschränkend anzusehen. Die Bewegung der Meßspitzen beim Meßvorgang kann auch schräg von der Seite her erfolgen oder - bei entsprechend umgedrehter Lage des Falz-Dachziegels 1 - auch von unten. Auch können an der Meßvorrichtung andere als die geschilderten Einstellmöglichkeiten mittels Klemmblöcken ausgebildet sein.

Die Fig. 4 zeigt rein schematisch einen Ausschnitt einer Produktionsanlage zur Herstellung von Dachziegeln, der sich auf den Teil der Anlage bezieht, welcher an den (nicht gezeigten) Brennofen anschließt. In diesem Teil ist ein taktweise gesteuertes Förderband 30 vorgesehen, auf dem die fertig gebrannten Dachziegel 1 hintereinander so angeordnet sind, daß ihr Wulst 2 in Förderrichtung verläuft. Seitlich von und in paralleler Ausrichtung zu dem Förderband 30 ist eine Meß- und Pufferstation 31 angeordnet, auf der in Förderrichtung nebeneinander eine Anzahl von Meßvorrichtungen M angeordnet ist, die gegenüber derjenigen nach Fig. 2 in der nachfolgend noch beschriebenen Weise modifiziert sind. In Fig. 4 ist nur eine Meßvorrichtung dargestellt; es versteht sich jedoch, daß die Anzahl der tatsächlich vorhandenen Meßvorrichtungen derjenigen Anzahl von Dachziegeln 1 entspricht, die gleichzeitig in der Meß- und Pufferstation 31 auf ihre Flügeligkeit hin vermessen werden sollen.

Wiederum parallel zur Förderrichtung des Förderbandes 30, jedoch auf der anderen Seite der Meß- und Pufferstation 31 erstreckt sich ein weiteres Förderband 32, das zu einer Palettierstation 33 führt. In der Palettierstation 33 werden die Dachziegel 1 auf nicht näher beschriebene, weil bekannte Weise auf Paletten zusammengefasst und, beispielsweise durch Einhüllen in eine starke Schrumpffolie, verpackt. Das Förderband 32 kann unabhängig von dem Förderband 30 getaktet sein.

Die in der Meß- und Pufferstation 31 angeordneten Meßvorrichtungen M unterscheiden sich von derjenigen gemäß Fig. 2 insofern, als auf der nicht gezeigten Längsmittelstrebe 13 ein jeweils auf die Breite der Dachziegel 1 einstellbarer Anschlag vorgesehen ist und der Meßschlitten 14 durch eine ebenfalls nicht gezeigte Betätigungsvorrichtung gegen diesen Anschlag hin und von diesem weg verfahrbar ist. Außerdem sind die Meßtaster 22 mit einer nur schematisch angedeuteten Steuereinheit, beispielsweise einer CPU, verbunden, die bei Überschreiten der Toleranzgrenze für die Flügeligkeit der Dachziegel 1 Steuerbefehle zum Aussondern der entsprechend gemessenen Dachziegel 1 anschließend an den Meßvorgang gibt. Auch die Meßtaster 22 sind durch eine nicht gezeigte Betätigungsvorrichtung, die von der CPU gesteuert ist, heb- und senkbar.

Das Meßverfahren läuft folgendermassen ab: Von den Dachziegeln 1, die taktweise auf dem Förderband 30 vom Brennofen her herangefördert werden, wird eine bestimmte Anzahl, z.B. zehn, gleichzeitig durch eine nicht gezeigte Greifereinrichtung entnommen und in Richtung des Pfeiles 34 quer zur Meß- und Pufferstation 31 verbracht. Die dort angeordneten Meßvorrichtungen M sind so nebeneinander angeordnet, daß die Dachziegel 1 unmittelbar über die Meßvorrichtungen gelangen und auf deren Meßrahmen abgelegt werden können. Entweder durch die Greifereinrichtung selbst oder durch die Betätigungsvorrichtung, die anschließend den Meßschlitten 14 gegen den erwähnten Anschlag auf der Längsmittelstrebe 13 verschiebt, können nunmehr die Dachziegel 1 mit ihrem Wulst 2 unter die schräg ansteigenden Blattfedern der Klemmvorrichtung 28 geschoben werden, wodurch die Wulstunterkante 3 in der vorstehend bereits beschriebenen Weise eine einwandfreie Auflage auf den Schneiden 25 der Meßvorrichtung M erhält. Erfolgt dieses Einschieben durch die Greifer, so verschiebt anschließend die Betätigungsvorrichtung den Meßschlitten 14 bis zu dem genannten Anschlag hin, der so eingestellt ist, daß die Meßtaster 22 die richtige Meßlage über den Meßpunkten P1 und P2 einnehmen. Erfolgt die Verschiebung der Dachziegel 1 unter die Klemmvorrichtung 28 durch die Betätigungsvorrichtung selbst, so befinden sich die Meßtaster 22 unmittelbar danach von selbst bereits in der richtigen Meßlage. Nunmehr erfolgt das vorstehend bereits beschriebene Herabfahren der Klemmblöcke 19 und damit der Meßtaster 22 auf die Dachziegel 1, was ebenfalls automatisch durch die Steuereinrichtung 33 gesteuert ausgeführt wird. Ist der Meßvorgang beendet, so werden die Dachziegel 1 durch die Greifereinrichtung von den Meßvorrichtungen M wieder abgehoben und in Richtung des Pfeiles 35 auf das Förderband 32 verbracht und von dort zur Palettierstation 33 weiterbefördert.

Während der Zeitdauer, die der Meßvorgang in der Meß- und Pufferstation 31 erfordert, sind durch das Förderband 30 wieder Dachziegel 1 in entsprechender Anzahl neben die Meß- und Pufferstation 31 verbracht worden, so daß die inzwischen zurückgekehrte Greifereinrichtung erneut Dachziegel 1 aufnehmen und in die Meß- und Pufferstation 31 verbringen kann. Durch die Wahl der Anzahl von jeweils gleichzeitig zu messenden Dachziegeln 1 lässt sich die für den eigentlichen Meßvorgang sowie die für die Hin- und Herbewegung der Greifereinrichtung notwendige Zeit erzielen. Da alle Meßvorgänge an den Dachziegeln 1 gleichzeitig ausgeführt werden, verursacht die Flügeligkeitsmessung keine Verlängerung des Produktionsprozesses. Da die Meßvorrichtungen verhältnismässig einfach aufgebaut sind, können sie auch ohne ins Gewicht fallende Erhöhung der Anlagekosten in der Anzahl in der Meß- und Pufferstation 31 vorgesehen werden, die den gleichzeitig zu vermessenden Dachziegeln 1 entspricht.

Wie vorstehend bereits erwähnt, kann das Einschieben der Dachziegel 1 mit ihrem Wulst 2 unter die Klemmvorrichtung 28 der Meßvorrichtungen M durch die den Transport bewerkstelligende Greifereinrichtung selbst erfolgen. In diesem Fall ist die Bewegungsbahn der Greifereinrichtung so programmiert, daß sich an das senkrecht erfolgende Absetzen der Dachziegel 1 auf die Meßrahmen der Meßvorrichtungen M ein kurzer Horizontalweg anschließt. Da die Dachziegel 1 auf dem Förderband 30 so angeordnet sind, daß auf diesem kurzen Horizontalweg der Wulst 2 sich in Bewegungsrichtung vorne befindet, schiebt letzterer sich unter die Klemmvorrichtung 28 und betätigt diese dadurch zugleich. Zum erneuten Abheben der Dachziegel 1 von den Meßvorrichtungen M müssen die Dachziegel zunächst um den entsprechenden kurzen Horizontalweg wieder aus der Klemmvorrichtung hervorgezogen werden, um dann wieder senkrecht angehoben werden zu können. Es ist möglich, den Transport der Dachziegel 1 zu den Meßvorrichtungen M hin durch eine erste Greifereinrichtung vornehmen zu lassen, die nur zwischen dem Förderband 30 und der Meß- und Pufferstation 31 pendelt, den Abtransport der Dachziegel 1 aus der Meß- und Pufferstation 31 hingegen durch eine zweite Greifereinrichtung, die nur zwischen der Meß- und Pufferstation 31 und dem Förderband 32 pendelt.

Da der Meßschlitten 14 der Meßvorrichtungen M ohnehin weit vom Anschlag zurückgezogen werden muß, um ein Absetzen der Dachziegel 1 ohne die Gefahr einer Beschädigung der Meßtaster zu ermöglichen, bietet sich allerdings ein Verschieben der Dachziegel 1 unter die Klemmvorrichtung 28 durch die Betätigungsvorrichtung des Meßschlittens 14 selbst an. In diesem Fall kann die Greifereinrichtung bezüglich ihrer Bewegungsbahn einfacher ausgelegt und gesteuert sein.

Eine weitere denkbare Lösung wäre es, die Dachziegel 1 durch die Greifereinrichtung in der Meß- und Pufferstation 31 nur in einer bestimmten Position festzulegen und anschließend, beispielsweise von unten her, die Meßvorrichtungen M an die festliegenden Dachziegel 1 in die Meßlage heranzufahren. In diesem Fall bedarf es entsprechender Hub- und Senkvorrichtungen für die Meßvorrichtungen M selbst.

Es kann daran gedacht werden, die Flügeligkeitsmessung der Dachziegel 1 zu kombinieren mit einer an sich bekannten Klangmessung, bei der die Dachziegel mechanisch angeschlagen werden. Das Klangspektrum lässt erkennen, ob der Dachziegel Fehlstellen oder Risse hat und ausgeschieden werden muß. Die Klangmessung erfolgt dabei ebenfalls in Gruppen der Dachziegel und kann ggf. gleichzeitig mit der Flügeligkeitsmessung, d.h. an dem in der Meßvorrichtung M aufgenommenen Dachziegel, erfolgen. Das ist deshalb zweckmässig, weil auch die Klangmessung eine eindeutig definierte Lage des Dachziegels voraussetzt, um zutreffende Rückschlüsse auf das Vorhandensein von Fehlstellen liefern zu können. Die Ausbildung der in Fig. 4 gezeigten und vorstehend beschriebenen Anlage ist im übrigen nicht auf die Flügeligkeits- bzw. Klangmessung von Falz-Dachziegeln beschränkt. Vielmehr lässt sich die gruppenweise Herausnahme von Dachziegeln aus dem Produktionsprozeß zum Zweck der Durchführung der Flügeligkeits- und insbesondere der Klangmessung in einer gesonderten Meß- und Pufferstation und die anschließende Rückführung der Dachziegel in den Produktionsprozeß mit Vorteil auch für Biberschwänze und andere stranggepresste Dachziegel anwenden. Insoweit wird für diese Ausgestaltung Schutz unabhängig von der Art der Dachziegel beansprucht.

## Patentansprüche

1. Verfahren zum Messen der Flügeligkeit eines Falz-Dachziegels (1),
**gekennzeichnet durch** die Schritte
- Ausrichten der Unterkante (3) des Wulstes (2) des Falz-Dachziegels längs einer geraden Linie (25-25),
- Festlegen einer zu der geraden Linie parallelen Bezugsgeraden (23-23),
- Festlegen zweier Punkte (P1, P2) auf einer zu der Bezugsgeraden annähernd parallelen Meßgeraden auf der Oberseite des Wasserfalzes (4) des Falz-Dachziegels,
- Messen des jeweiligen Abstandes der Punkte von der Bezugsgeraden, und
- Bestimmung der Differenz der gemessenen Abstände.

2. Verfahren zum Messen der Flügeligkeit eines Falz-Dachziegels (1),
**gekennzeichnet durch** die Schritte
- Ausrichten der Oberseite des Wasserfalzes (4) des Falz-Dachziegels längs einer sich zumindest annähernd in Dachziegel-Längsrichtung erstreckenden geraden Linie,
- Festlegen einer zu der geraden Linie parallelen Bezugsgeraden,
- Festlegen zweier in Dachziegel-Längsrichtung beabstandeter Punkte auf der Unterkante (3) des Wulstes (2) des Falz-Dachziegels,
- Messen des jeweiligen Abstandes der beiden Punke von der Bezugsgeraden, und
- Bestimmung der Differenz der gemessenen Abstände.

3. Verfahren nach Anspruch 1,
**dadurch gekennzeichnet**,
daß die Bezugsgerade (23-23) in der Nähe des Wasserfalzes (4) festgelegt wird.

4. Verfahren nach Anspruch 2,
**dadurch gekennzeichnet**,
daß die Bezugsgerade in der Nähe der Unterkante (3) des Wulstes (2) festgelegt wird.

5. Vorrichtung zum Messen der Flügeligkeit eines Falz-Dachziegels (1),
**gekennzeichnet durch**
einen Meßrahmen (10) zur Auflagerung des Falz-Dachziegels mit einer Zweipunkt-Auflage (25) für die Unterkante (3) des Wulstes (2) oder die Oberseite des Wasserfalzes (4), durch die eine gerade Linie längs der Wulst-Unterkante bzw. der Wasserfalz-Oberseite definiert ist, und durch eine Halterung (18, 19, 20) für ein Paar von Meßtastern (22), die im Bereich des Wasserfalzes (4) bzw. der Wulstunterkante (3) in einem Längsabstand, bezogen auf den Dachziegel, voneinander angeordnet sind, annähernd den gleichen Abstand von der Zweipunkt-Auflage (25) aufweisen und auf die Wasserfalz-Oberseite bzw. auf die Wulstunterkante aufsetzbar sind.

6. Vorrichtung nach Anspruch 5,
**dadurch gekennzeichnet**,
daß die Zweipunkt-Auflage eine Anschlagleiste (26) zur Ausrichtung des Falz-Dachziegels aufweist.

7. Vorrichtung nach Anspruch 5 oder 6,
**dadurch gekennzeichnet**,
daß die Halterung in gleichbleibender paralleler Ausrichtung zu der Zweipunkt-Auflage senkrecht zu dieser verstellbar ist.

8. Vorrichtung nach einem der Ansprüche 5 bis 7,
**dadurch gekennzeichnet**,
daß die Meßtaster (22) an der Halterung auf einer zu der Zweipunkt-Auflage parallelen Linie angeordnet und gemeinsam relativ zu dem Meßrahmen (10) höhenverstellbar sind.

9. Vorrichtung nach einem der Ansprüche 5 bis 7,
**dadurch gekennzeichnet**,
daß die Halterung zwei Säulen (18) trägt, längs denen die Meßtaster relativ zu dem Meßrahmen getrennt voneinander höhenverstellbar sind.

10. Vorrichtung nach einem der Ansprüche 5 bis 9,
**dadurch gekennzeichnet**,
daß der Meßrahmen eine Klemmvorrichtung (28) zum Fixieren des Wulstes bzw. des Wasserfalzes auf der Zweipunkt-Auflage aufweist.

11. Vorrichtung nach einem der Ansprüche 5 bis 10,
**dadurch gekennzeichnet**,
daß die Halterung auf einem relativ zu der Zweipunkt-Auflage verstellbaren Meßschlitten (14) angeordnet ist.

12. Vorrichtung nach einem der Ansprüche 5 bis 11,
**dadurch gekennzeichnet**,
daß der Abstand der Meßtaster (22) voneinander einstellbar ist.

13. Vorrichtung nach Anspruch 11,
**dadurch gekennzeichnet**,
daß an dem Meßrahmen (10) ein einstellbarer Anschlag vorgesehen ist, durch den die Meßposition des Meßschlittens (14) bestimmt ist.

14. Vorrichtung nach Anspruch 13,
**dadurch gekennzeichnet**,
daß an dem Meßrahmen (10) eine Betätigungsvorrichtung zur Verstellung des Meßschlittens (14) zu dem Anschlag hin und von dem Anschlag weg angeordnet ist.

15. Vorrichtung nach Anspruch 14,
**dadurch gekennzeichnet**,
daß die Betätigungsvorrichtung ein Schub- und Zugglied aufweist, um einen auf dem Meßrahmen (10) außerhalb der Klemmvorrichtung (28) angeordneten Falz-Dachziegel (1) in die Klemmvorrichtung (28) einzuschieben bzw. aus dieser herauszuziehen.

16. Anlage zur Herstellung von Dachziegeln (1) mit einem Brennofen, einer an den Brennofen anschließenden Fördereinrichtung (30) zur taktweisen Förderung der Falz-Dachziegel (1), einer der Fördereinrichtung (30) zugeordneten Meß- und Pufferstation (31), in der eine Anzahl von Meßvorrichtungen (M) gemäß einem der Ansprüche 13 bis 15 angeordnet ist, und mit einer Greifereinrichtung, die gleichzeitig eine der Anzahl von Meßvorrichtungen M in der Meß- und Pufferstation (31) entsprechende Anzahl von Falz-Dachziegeln auf die Meßvorrichtungen M verbringen kann.

17. Anlage nach Anspruch 16,
**dadurch gekennzeichnet**,
daß den Meßvorrichtungen (M) jeweils eine Meßvorrichtung zur Klangmessung zugeordnet ist.
